# EUROPÄISCHE PATENTANMELDUNG

(11) **EP 1 227 258 A2**
(43) Veröffentlichungstag der Anmeldung: **31.07.2002**
(21) Anmeldenummer: 01129358.6
(22) Anmeldetag: 17.12.2001
(51) Int. Cl.: F16D 25/10

(54) **Mehrfach-Kupplungseinrichtung**

(30) Priorität: 25.01.2001 DE 10103306; 02.03.2001 DE 10110145
(71) Anmelder: ZF Sachs AG, 97424 Schweinfurt (DE)
(72) Erfinder: Kundermann, Wolfgang, Dipl.-Ing., 97422 Schweinfurt (DE)

(57) **Zusammenfassung**

Nach einem Aspekt wird eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe vorgeschlagen. Die Kupplungseinrichtung (10a) weist eine einer ersten Getriebeeingangswelle (22a) des Getriebes zugeordnete erste Kupplungsanordnung (64a) und eine einer zweiten Getriebeeingangswelle (24a) des Getriebes zugeordnete zweite Kupplungsanordnung (72a) auf zur Momentenübertragung zwischen der Antriebseinheit und dem Getriebe, wobei von den Getriebeeingangswellen wenigstens eine (22a, 24a) als Hohlwelle ausgebildet ist und eine (22a) der Getriebeeingangswellen durch eine andere, als Hohlwelle ausgebildete Getriebeeingangswelle (24a) verläuft. Eine Eingangsseite (62a) einer (64a) der Kupplungsanordnungen liegt im Momentenübertragungsweg zwischen der Antriebseinheit und dem Getriebe über eine andere (72a) der Kupplungsanordnungen. Die Eingangsseite (62a) der einen Kupplungsanordnung (64a) steht über wenigstens ein sich bezogen auf eine zu wenigstens einer der Getriebeeingangswellen koaxiale Kupplungsachse (A) in radialer Richtung erstreckendes, vorzugsweise scheibenförmiges Momentenübertragungsglied (60a) mit einer Eingangsseite (34a) der Kupplungseinrichtung (10a) in Momentenübertragungsverbindung. Die Eingangsseite (34a) der Kupplungseinrichtung (10a) ist zur direkten oder indirekten Ankoppelung einer Abtriebswelle (16a) der Antriebseinheit vorgesehen und ausgebildet. Das Momentenübertragungsglied (60a) und die Eingangsseite (34a) der Kupplungseinrichtung (10a) sind von voneinander gesonderten Bauteilen gebildet, und das Momentenübertragungsglied (60a) ist unabhängig von der Eingangsseite (34a) der Kupplungseinrichtung (10a) direkt oder indirekt an wenigstens einer der Getriebeeingangswellen (22a, 24a) axial oder/und radial abgestützt.

## Beschreibung

Die Erfindung geht aus von einer Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle des Getriebes zugeordnete erste Kupplungsanordnung und eine einer zweiten Getriebeeingangswelle des Getriebes zugeordnete zweite Kupplungsanordnung aufweist zur Momentenübertragung zwischen der Antriebseinheit und dem Getriebe, wobei von den Getriebeeingangswellen wenigstens eine als Hohlwelle ausgebildet ist und eine der Getriebeeingangswellen durch eine andere, als Hohlwelle ausgebildete Getriebeeingangswelle verläuft, wobei eine Eingangsseite einer der Kupplungsanordnungen im Momentenübertragungsweg zwischen der Antriebseinheit und dem Getriebe über eine andere der Kupplungsanordnungen liegt, wobei die Eingangsseite der einen Kupplungsanordnung über wenigstens ein sich bezogen auf eine zu wenigstens einer der Getriebeeingangswellen koaxiale Kupplungsachse in radialer Richtung erstreckendes, vorzugsweise scheibenförmiges Momentenübertragungsglied mit einer Eingangsseite der Kupplungseinrichtung in Momentenübertragungsverbindung steht, wobei die Eingangsseite der Kupplungseinrichtung zur direkten oder indirekten Ankopplung einer Abtriebswelle der Antriebseinheit vorgesehen und ausgebildet ist.

Eine derartige Mehrfach-Kupplungseinrichtung hat die Anmelderin in verschiedenen Patentanmeldungen vorgeschlagen, es wird insbesondere auf die deutschen Patentanmeldungen Nr. 199 55 365.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen, deren Offenbarung in den Offenbarungsgehalt der vorliegenden Anmeldung einbezogen wird.

Bei dieser Konstruktion der Anmelderin bildet eine im Wesentlichen scheibenförmige, relativ starre Komponente sowohl das Momentenübertragungsglied als auch die Eingangsseite der Kupplungseinrichtung. Da diese Kompomnente einerseits Axialabstützungsfunktion für die Kupplungseinrichtung am Getriebe, genauer an den Getriebeeingangswellen erfüllt und andererseits die Notwendigkeit besteht, dass andere Komponenten der Kupplungseinrichtung an den Getriebeeingangswellen angeordnet und gesichert werden müssen, bevor als letzte Komponente der Kupplungseinrichtung die das Momentenübertragungsglied und die Eingangsseite der Kupplungseinrichtung bildende Komponente getriebeseits montiert wird, ist die Montage der Kupplungseinrichtung relativ aufwendig. Aufgrund der relativ starren Ausführung der Komponente, werden von der Kurbelwelle eines als Antriebseinheit dienenden Motors relativ ungehindert Störkräfte (Stöße) in die Kupplungseinrichtung eingeleitet, ggf. über einen zwischen der Kupplungseinrichtung und der Antriebseinheit angeordneten Torsionsschwingungsdämpfer.

Die Erfindung trachtet danach, hier Verbesserungen zu schaffen.

Nach einem Aspekt wird für die eingangs angegebene Kupplungseinrichtung erfindungsgemäß vorgeschlagen, dass das Momentenübertragungsglied und die Eingangsseite der Kupplungseinrichtung von voneinander gesonderten Bauteilen gebildet sind, und dass das Momentenübertragungsglied unabhängig von der Eingangsseite der Kupplungseinrichtung direkt oder indirekt an wenigstens einer der Getreibeeingangswellen axial oder/und radial abgestützt oder abstützbar ist.

Dadurch, dass das Momentenübertragungsglied unabhängig von der Eingangsseite der Kupplungseinrichtung an einer der Getriebeeingangswellen axial oder/und radial abgestützt bzw. abstützbar ist, wird erreicht, dass im Zuge der Montage die genannte Abstützung schon vor der Montage der Eingangsseite der Kupplungseinrichtung wirksam werden kann, so dass das Momentenübertragungsglied demgemäß in einer Soll-Lage gehalten wird und demgemäß die Montage der Eingangsseite der Kupplungseinrichtung vereinfacht ist. Es wird insbesondere an eine axiale Abstützung gedacht, die unter Vermittlung des Momentenübertragungsglieds für weitere Komponenten der Kupplungseinrichtung, soweit schon montiert, wirksam ist und diese Komponenten gemeinsam in einer die Montage erleichternden axialen Soll-Position hält. Zweckmäßig ist beispielweise eine Montage derart, dass das Getriebe in eine Stellung gebracht wird, in der eine normalerweise etwa horizontal verlaufende Getriebeachse zumindest näherungsweise vertikal verläuft. Zur Montage der Kupplungseinrichtung kann diese dann von oben auf das Getriebe abgesenkt werden. Die angesprochene axiale Abstützung des Momentenübertragungsglieds, unabhängig von der Eingangsseite der Kupplungseinrichtung, kann dafür sorgen, dass die Kupplungseinrichtung, soweit schon montiert, nicht zu tief in die Getriebegehäuseglocke oder dergleichen absinkt und es demgemäß nicht erforderlich ist, zur Montage der Eingangsseite der Kupplungseinrichtung die Kupplungseinrichtung, soweit schon montiert, wieder anzuheben.

Nach einem zweiten Aspekt schlägt die Erfindung für die eingangs genannte Mehrfach-Kupplungseinrichtung vor, dass das Momentenübertragungsglied und die Eingangsseite der Kupplungseinrichtung von voneinander gesonderten Bauteilen gebildet sind, und dass die Eingangsseite der einen Kupplungsanordnung, das Momentenübertragungsglied und die Eingangsseite der Kupplungseinrichtung derart angeordnet und ausgebildet sind, dass beim Eingliedern der Kupplungseinrichtung in einem Antriebsstrang die Eingangsseite der einen Kupplungsanordnung und das Momentenübertragungsglied gemeinsam als Teile oder Abschnitte einer Einbau-Baueinheit in einen Antriebsstrang auf Seiten des Getriebes angliederbar sind und dass nach dem Angliedern dieser Einbau-Baueinheit die Eingangsseite der Kupplungseinrichtung unter Herstellung der Momentenübertragungsverbindung an der am Getriebe angeordneten Einbau-Baueinheit angliederbar ist.

Nach dem zweiten Erfindungsaspekt ist vorgesehen, dass das Momentenübertragungsglied und die Eingangsseite der einen Kupplungsanordnung zu einer Einbau-Baueinheit vormontierbar sind oder von vorneherein eine entsprechende Baueinheit bilden. Der Montageaufwand beim Eingliedern der Kupplungseinrichtung in einem Antriebsstrang wird dementsprechend reduziert.

Vorzugsweise sind die Eingangsseite der Kupplungseinrichtung und das Momentenübertragungsglied mit Mitnahmeformationen ausgeführt, die vermittels einer eine axiale Relativbewegung umfassenden Relativbewegung in bzw. außer gegenseitigen Mitnahmeeingriff bringbar sind. Vorzugsweise sind die Mitnahmeformationen vermittels einer rein axialen Relativbewegung in bzw. außer gegenseitigen Mitnahmeeingriff bringbar und dazu ausgebildet, unter Erhalt des Mitnahmeeingriffs Axialspiel zwischen der Eingangsseite und dem Momentenübertragungsglied zuzulassen. Hierdurch wird erreicht, dass auf die Eingangsseite der Kupplungseinrichtung von Seiten der Antriebseinheit wirkende. Axialstöße und dergleichen nicht oder nur abgeschwächt über das Momentenübertragungsglied in die Kupplungseinrichtung eingeleitet werden.

Vorzugsweise weist die Einbau-Baueinheit wenigstens einen Axialanschlag auf, der - ggf. unter Vermittlung wenigstens einer Axiallageranordung - unabhängig von der Eingangsseite der Kupplungseinrichtung und in Zusammenwirken mit einem getriebeseitigen Gegen-Axialanschlag (ggf. einer Endfläche einer Getriebeeingangswelle) für die Baueinheit eine axiale Soll-Position oder Position maximaler axialer Annäherung an das Getriebe definiert. Es ergeben sich die in Zusammenhang mit dem ersten Erfindungs-Aspekt genannten Vorteile bei der Eingliederung der Einbau-Baueinheit in einem Antriebsstrang, insbesondere im Falle einer Montage der Einbau-Baueinheit in einer Vertikalstellung des Getriebes.

Weiterbildend wird vorgeschlagen, dass die Einbau-Baueinheit oder wenigstens die Eingangsseite der einen Kupplungsanordnung unter Vermittlung des Momentenübertragungsglieds am Gegen-Axialanschlag axial abgestützt oder abstützbar ist. Hierzu ist es besonders bevorzugt, dass das Momentenübertragungsglied entsprechend dem ersten Erfindungsaspekt unabhängig von der Eingangsseite der Kupplungseinrichtung direkt oder indirekt an wenigstens einer der Getriebeeingangswellen axial oder/und radial abgestützt oder abstützbar ist. Es kann alternativ aber auch vorgesehen sein, dass die Eingangsseite der Kupplungseinrichtung dem Momentenübertragungsglied eine axiale oder/und radiale Abstützung an wenigstens einer der Getriebeeingangswellen vermitttelt. Es kann zweckmäßig sein, dass das Momentenübertragungsglied unter Vermittlung der Eingangsseite der Kupplungseinrichtung oder unabhängig hiervon nur radial oder nur unwesentlich an der Getriebeeingangswellenanordnung abgestützt ist, um statische Überbestimmungen in Bezug auf die Einbau-Baueinheit zu vermeiden.

Das Momentenübertragungsglied kann in einem radial inneren Bereich unter Vermittlung einer an einer der Getriebeeingangswellen angeordneten Ausgangsseite einer der Kupplungsanordnungen an wenigstens einer der Getriebeeingangswellen axial oder/und radial abgestützt oder abstützbar sein. Hierzu kann zwischen dem radial inneren Bereich und der Ausgangsseite eine Lageranordnung vorgesehen sein, die die radiale oder/und axiale Abstützung vermittelt.

Als Lageranordnung kommt beispielsweise eine Gleitlageranordnung in Betracht. Beispielsweise hat es sich als vorteilhaft erwiesen, wenn die Gleitlageranordnung eine Bundbuchse aufweist. Ferner kommt als Lageranordnung eine Wälzlageranordnung in Betracht. Es hat sich insbesondere als vorteilhaft erwiesen, als Wälzlageranordnung eine Schrägkugellageranordnung vorzusehen, die in einer Axialrichtung vergleichsweise hohe Axialkräfte aufnehmen kann.

Das Momentenübertragungsglied kann aus mehreren (vorzugsweise dauerhaft miteinander verbundenen, ggf. miteinander verschweißten oder vernieteten) Bauteilen gebildet sein. Es kann zweckmäßig vorgesehen sein, dass von den Bauteilen wenigstens ein Bauteil wenigstens einen Verbindungs- oder Ankoppelabschnitt zur Verbindung mit bzw. Ankopplung an der Eingangsseite der einen Kupplungsanordnung und wenigstens ein anderes Bauteil wenigstens einen ggf. die Mitnahemformationen aufweisenden Verbindungs- oder Ankoppelabschnitt zur Verbindung mit bzw. Ankopplung an der Eingangsseite der Kupplungseinrichtung aufweist.

Als besonders bevorzugt wird vorgeschlagen, dass zwischen dem Momentenübertragungsglied und der Eingangsseite der Kupplungseinrichtung eine Federanordnung vorgesehen ist, die auf die Eingangsseite ausgeübte axiale Stöße gegenüber dem Momentenübertragungsglied zumindest teilweise abdämpft. Durch die Abdämpfung bzw. Abmilderung derartiger Stöße werden die Axiallager der Kuplungseinrichtung entsprechend entlastet, so dass sich eine höhere Lebensdauer ergibt.

Es kann eine Positionieranordnung vorgesehen sein, die das Momentenübertragungsglied oder/und die Eingangsseite der Kupplungseinrichtung relativ zur wenigstens einen anderen Komponente des Antriebsstrangs, insbesondere der Kupplungseinrichtung selbst, axial positioniert. Beispielsweise kann die Positionieranordnung wenigstens eine Federanordnung zwischen dem Momentenübertragungsglied und der Eingangsseite der Kupplungseinrichtung oder/und zwischen der Eingangsseite der Kupplungseinrichtung und einer der Kupplungseinrichtung axial benachbarten Komponente des Antriebsstrangs (ggf. einer Ausgangsseite einer Torsionsschwingungsdämpferanordnung) umfassen. Eine andere Möglichkeit ist, dass die Positionieranordnung wenigstens ein Abstütz- oder Sicherungsglied aufweist, das die Eingangsseite der Kupplungseinrichtung in Richtung zur Antriebseinheit am Momentenübertragungsglied abstützt oder sichert.

Das Abstütz- oder Sicherungsglied kann als Abstütz- oder Sicherungsblech oder als vorzugsweise sprengringartiger Abstütz- oder Sicherungsring ausgeführt sein. Gemäß einer zweckmäßigen Ausgestaltung greift das Abstütz- oder Sicherungsglied momentenübertragungsgliedseitig zwischen das Momentenübertragungsglied und einen daran angebrachten Sicherungsring ein. Als besonders bevorzugt wird vorgeschlagen, dass das Abstützoder Sicherungsglied momentenübertragungsgliedseitig zwischen wenigstens einen Hauptabschnitt des Momentenübertragungsglieds und wenigstens eine daraus ausgeklingte und axial herausgebogene Sicherungslasche eingreift. Diese Ausgestaltung ist insbesondere im Zusammenhang mit dem sprengringartigen Abstütz- oder Sicherungsring vorteilhaft, insbesondere hinsichtlich der Herstellungs- und Montagekosten.

Es kann auch vorgesehen sein, dass die Positionieranordnung an der Eingangsseite der Kupplungseinrichtung wenigstens eine Anlagefläche aufweist, die innerhalb eines Antriebsstrangs an einer Gegen-Anlagefläche einer der Kupplungseinrichtung axial benachbarten Komponente des Antriebsstrangs (ggf. eine Ausgangsseite einer Torsionsschwinungsdämpferanordnung) axial abstützbar ist.

Als besonders bevorzugt wird vorgeschlagen, dass das Momentenübertragungsglied eine Eigenelastizität aufweist, die unter Vermittlung der Eingangsseite der Kupplungseinrichtung auf das Momentenübertragungsglied ausgeübte axiale Stöße gegenüber der Eingangsseite der einen Kupplungsanordnung zumindest teilweise abdämpft. Es ergeben sich die schon angesprochenen Vorteile, nämlich eine Entlastung des Axiallagers bzw. der Axiallager der Kupplungseinrichtung und dementsprechend eine längere Lebensdauer dieser Axiallageranordnung.

Die Ausbildung des Momentenübertragungsglieds mit Eigenelastizität ist auch unabhängig von dem ersten und dem zweiten Aspekt von Interesse. Dementsprechend schlägt die Erfindung nach einem dritten Aspekt für die eingangs genannte Kupplungseinrichtung vor, dass das Momentenübertragungsglied eine Eigenelastizität aufweist, die unter Vermittlung der Eingangsseite der Kupplungseinrichtung auf das Momentenübertragungsglied ausgeübte axiale Stöße gegenüber der Eingangsseite der einen Kupplungsanordnung zumindest teilweise abdämpft.

Hinsichtlich der Art und Weise, wie das Momentenübertragungsglied zum Vorsehen einer hinreichenden Eigenelastizität ausgebildet ist, bestehen grundsätzlich keine Einschränkungen. Eine bevorzugte Ausführungsform zeichnet sich dadurch aus, dass das Momentenübertragungsglied im Wesentlichen plattenförmig ist, also als elastische Platte ausgeführt ist oder eine derartige Platte aufweist. Es wird insbesondere daran gedacht, das Momentenübertragungsglied bzw. eine Teilkomponente davon in der Art einer Flexplatte auszuführen.

Es kann vorgesehen sein, dass das Momentenübertragungsglied mit der ggf. als Lamellenträger, vorzugsweise als Außenlamellenträger, ausgebildeten Eingangsseite der einen Kupplungsanordnung verschweißt ist. Hierdurch kann eine spielfreie und damit klapperfreie Verbindung zwischen dem ggf. als Mitnehmerscheibe ausgeführten Momentenübertragungsglied und der Eingangsseite (ggf. dem Außenlamellenträger) erreicht werden. Ferner kann hierdurch wirkungsvoll erreicht werden, dass der Außenlamellenträger am offenen Ende gegen die Wirkung der Fliehkraft unterstützt wird.

Als besonders bevorzugt wird vorgeschlagen, dass das Momentenübertragungsglied an einem Kopfkreisbereich einer Verzahnung des Lamellenträgers angeschweißt ist. Vorzugsweise kommt zum Anschweißen des Momentenübertragungsglieds an der Eingangsseite, ggf. dem Lamellenträger, ein vorzugsweise getaktetes Lederschweißverfahren zum Einsatz.

Die Verschweißung kann beispielsweise axiaf durch das Momentenübertragungsglied hindurch oder von radial außen in der Berührungsebene zwischen einer Stirnfläche des Lamellenträgers und einer Anlagefläche des Momentenübertragungsglieds erfolgen. Besonders zweckmäßig erscheint eine Ausbildung des Momentenübertragungsglieds mit einer Mehrzahl von elastischen Zungen, die am Lamellenträger angeschweißt sind.

Eine besonders bevorzugte Ausführungsform zeichnet sich dadurch aus, dass die ggf. als Lamellenträger, vorzugsweise Außenlamellenträger, ausgebildete Eingangsseite der einen Kupplungsanordnung mit einer ersten Verzahnung ausgeführt ist und das Momentenübertragungsglied mit einer zweiten Verzahnung ausgeführt ist, wobei die beiden Verzahnungen radial ineinandergreifen und radial in den Eingriff vorgespannt sind. Hierfür kann das Momentenübertragungsglied beispielsweise einen zentralen Körperbereich aufweisen, von welchem nach radial außen eine Mehrzahl elastischer zungenartiger Vorsprünge ausgeht, die in einem radial äußeren Bereich jeweils wenigstens einen Zahn der zweiten Verzahnung aufweisen. Weiterbildend wird vorgeschlagen, dass ausgehend vom zentralen Körperbereich die radialen Vorsprünge zunächst in einem ersten Biegungsbereich vorzugsweise näherungsweise in Achsrichtung abgebogen sind, dann in einem zweiten Biegungsbereich im Wesentlichen nach radial außen abgebogen sind, dann in einem dritten Biegungsbereich vorzugsweise wieder näherungsweise in Achsrichtung abgebogen sind und in diesem sich näherungsweise in Achsrichtung erstreckenden Bereich wenigstens einen Zahn der zweiten Verzahnung aufweisen. Die hier vorgeschlagene Ausbildung des Momentenübertragungsglieds mit elastischen und gegebenenfalls gebogenen zungenartigen Vorsprüngen ist unabhängig von der Art und Weise der Verkoppelung mit der Eingangsseite der einen Kupplungsanordnung von Interesse.

Die erste und die zweite Verzahnung lassen sich vorteilhaft derart ausführen und radial vorspannen, dass ein im Wesentlichen spielfreier Eingriff (spielfrei sowohl in radialer Richtung als auch in Umfangsrichtung sowie ggf. auch in axialer Richtung etwa unter Vermittlung eines reibschlüssigen Eingriffs zwischen den Verzahnungen) gewährleistet ist. Um dies zu erreichen, erscheint es besonders zweckmäßig, Zähne der ersten und zweiten Verzahnung mit aufeinander abgestimmten Keilflächen an ihren Zahnflanken auszuführen.

Die hier angesprochene Möglichkeit der Verbindung zwischen der Eingangsseite der Kupplungsanordnung und dem Momentenübertragungsglied wird als solche in den Offenlegungsschriften DE 198 48 281 A1, DE 198 48 252 A1 und DE 198 48 253 A1 beschrieben, deren Offenbarung durch Bezugnahme in die vorliegende Anmeldung einbezogen wird. Es wird in diesen Offenlegungsschriften speziell auf die drehfeste Verkopplung eines an einem Antrieb angreifenden Mitnehmers und einer Schwungmasse Bezug genommen. Der Mitnehmer kann als Momentenübertragungsglied im Sinne der hier interessierenden Kupplungseinrichtung identifiziert werden, der anstelle einer "Schwungmasse" die Eingangsseite der einen Kupplungsanordnung an der Eingangsseite der Kupplungseinrichtung drehfest ankoppelt. Ausgestaltungsmöglichkeiten für die Verzahnungen bzw. die Verzahnungen aufweisende Bauteilabschnitte, Ausgestaltungsmöglichkeiten für das Momentenübertragungsglied und Möglichkeiten, wie die erste und die zweite Verzahnung in gegenseitigen Eingriff gebracht werden können (und hierbei vorteilhaft verwendbare Hilfseinrichtungen) ergeben sich aus den genannten Offenlegungsschriften.

Die hier vorgeschlagene Anwendung der als solche aus den Offenlegungsschriften bekannten Verkopplung zweier Komponenten mittels radial gegeneinander vorgespannten Verzahnungen auf die Ankopplung des Momentenübertragungsglieds an der Eingangsseite der einen Kupplungsanordnung bietet gegenüber der Verschweißung den Vorteilt, dass das Momentenübertragungsglied einfach demontierbar ist, so dass z. B. eine Aufarbeitung (Recycling) oder Reparatur der Kupplungseinrichtung ohne großen Aufwand möglich ist. Wollte man bei der verschweißten Ausführung die Kupplungseinrichtung aufarbeiten, so ist dies zwar auch möglich, würde aber beispielsweise ein Abdrehen des Momentenübertragungsglieds von der Eingangsseite der einen Kupplungsanordnung erfordern, um das Momentenübertragungsglied von der Eingangsseite zu trennen. Das Momentenübertragungsglied müsste dann durch ein neues Momentenübertragungsglied ersetzt werden.

Die erste und die zweite Kupplungsanordnung sind jeweils vorzugsweise als nasslaufende Lamellen-Kupplungsanordnung ausgeführt. Die Eingangsseite der einen Kupplungsanordnung kann von einem Lamellenträger, vorzugsweise Außenlamellenträger, der einen Kupplungsanordnung gebildet sein. Vorzugsweise handelt es sich bei der einen Kupplungsanordnung um die radial äußere Kupplungsanordnung.

Der Außenlamellenträger kann zusammen mit dem Momentenübertragungsglied ein Gehäuse bilden, das die Lamellen der ersten und der zweiten Kupplungsanordnung aufnimmt. Das Momentenübertragungsglied kann an wenigstens einer Nabe eines Lamellenträgers oder/und unter Vermittlung wenigstens einer Nabe eines Lamellenträgers axial oder/und radial abgestützt oder abstützbar sein. Bei einer vorteilhaften Konstruktion erfolgt die Abstützung an bzw. unter Vermittlung der Nabe eines Innenlamellenträgers. Die Eingangsseite der Kupplungseinrichtung kann von einem Wellenteil oder Nabenteil gebildet sein.

Betreffend weitere vorteilhafte Ausgestaltungen einer erfindungsgemäßen Kupplungseinrichtung wird auf die o.g. Patentanmeldungen der Anmelderin einschließlich der in diesen Anmeldungen formulierten Ansprüche verwiesen.

Die Erfindung betrifft ferner einen Kraftfahrzeug-Antriebsstrang, der eine Antriebseinheit, ein wenigstens zwei Getriebeeingangswellen aufweisendes Getriebe und eine erfindungsgemäße Kupplungseinrichtung zur Momentenübertragung zwischen der Antriebseinheit und dem Getriebe aufweist.

Die Erfindung betrifft ferner ein Verfahren zur Eingliederung einer erfindungsgemäßen Kupplungseinrichtung zwischen einer Antriebseinheit und einem Getriebe in einen Kraftfahrzeug-Antriebsstrang. Es wird erfindungsgemäß vorgeschlagen, dass das Verfahren die folgenden Schritte aufweist: Angliedern einer die Eingangsseite der einen Kupplungsanordnung und das Momentenübertragungsglied umfassenden Einbau-Baueinheit auf Seiten des Getriebes, Angliedern der Eingangsseite der Kupplungseinrichtung unter Herstellung der Momentenübertragungsverbindung an der am Getriebe angeordneten Einbau-Baueinheit und Zusammenfügen des Antriebsstrangs unter Herstellung einer Momentenübertragungsverbindung zwischen der Abtriebswelle der Antriebseinheit und der Eingangsseite der Kupplungseinrichtung.

Eine besonders vorteilhafte Ausgestaltung des Verfahrens zeichnet sich dadurch aus, dass im Zuge des Angliederns der Einbau-Baueinheit auf Seiten des Getriebes das Momentenübertragungsglied direkt oder indirekt an wenigstens einer der Getriebeeingangswellen axial oder/und radial abgestützt wird.

Die Eingliederung der Kupplungseinrichtung kann vorteilhaft derart erfolgen, dass zum Angliedern der Einbau-Baueinheit auf Seiten des Getriebes und Angliedern der Eingangsseite der Kupplungseinrichtung an der am Getriebe angeordneten Einbau-Baueinheit eine sich beim fertiggestellten Antriebsstrang im Wesentlichen in Antriebsstrang-Längsrichtung erstreckende Getriebeachse in eine Stellung gebracht wird, in der sich die Getriebeachse zumindest näherungsweise in Vertikalrichtung erstreckt.

Weiterbildend wird vorgeschlagen, dass im Zuge der Angliederung der Einbau-Baueinheit diese von oben in Richtung zum Getriebe abgesenkt wird, vorzugsweise bis wenigstens eine Axialanschlagpaarung wirksam wird. Entsprechend kann für die Eingliederung der Eingangsseite vorgesehen sein, dass diese von oben in Richtung zur Einbau-Baueinheit abgesenkt wird.

Die Angliederung der Kupplungseinrichtung im Antriebsstrang wird dann besonders einfach, wenn die Angliederung der Eingangsseite ohne ein Anheben der Einbau-Baueinheit auskommt.

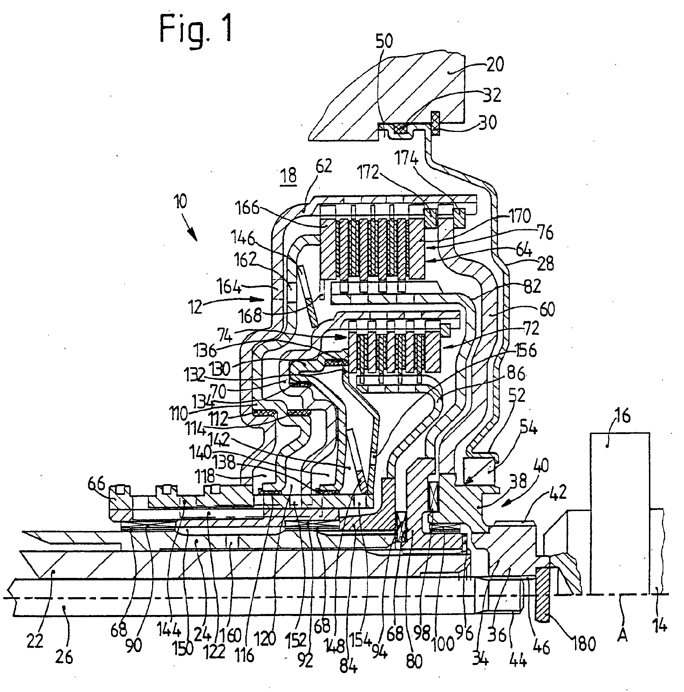

Die Erfindung wird im folgenden anhand mehrerer Ausführungsbeispiele näher erläutert, wobei von einer in verschiedenen Patentanmeldungen der Anmelderin behandelten Kupplungseinrichtungskonstruktion (Fig. 1) ausgegangen wird.
- Fig. 1: zeigt in einer teilgeschnittenen Darstellung eine in einem Antriebsstrang eines Kraftfahrzeugs zwischen einem Getriebe und eienr Antriebseinheit angeordnete Doppelkupplung mit zwei Lamellen-Kupplungsanordnungen, von der die Erfindung ausgeht.
- Fig. 2: zeigt ein erstes Ausführungsbeispiel einer erfindungsgemäßen Doppelkupplung.
- Fig. 3: zeigt ein zweites Ausführungsbeispiel einer erfindungsgemäßen Doppelkupplung.
- Fig. 4: zeigt ein drittes Ausführungsbeispiel einer erfindungsgemäßen Doppelkupplung.
- Fig. 5: zeigt ein viertes Ausführungsbeispiel einer erfindungsgemäßen Doppelkupplung.
- Fig. 6: zeigt ein fünftes Ausführungsbeispiel einer erfindungsgemäßen Doppelkupplung, und zwar in Fig. 6a in einer teilgeschnittenen Darstellung entsprechend den Fig. 1 bis 4 und in Fig. 6b in einer axialen Ansicht gemäß Pfeil B in Fig. 6a.

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe (etwa die Ölpumpe 220) dient, wie noch näher erläutert wird. Ist wenigstens eine elektromotorisch angetriebene Ölpumpe vorgesehen, kann auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 1 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines 0-Rings oder eines sonstigen Dichtrings hergestellt sein kann. In Fig. 1 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 1 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient und dementsprechend zutreffend als Momentenübertragungsglied bezeichenbar ist. Der Außenlamellenträger 62 erstreckt sich in Richtung zum Getriebe und nach radial innen zu einem Ringteil 66, an dem der Außenlamellenträger drehfest angebracht ist und das mittels einer Axialund Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen aufdermormalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung o. dgl. ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 1 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein derersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer zugeordneten hydraulischen Druckquellenanordnung in Verbindung, wobei der Druckmediumskanal 122 über eine das Ringteil 66 aufnehmende, ggf. getriebefeste Anschlusshülse an der Druckquellenanordnung angeschlossen ist. Die Anschlusshülse und das Ringteil 66 bilden eine Drehverbindung. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 1 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an der zugeordneten Druckquellenanordnung angeschlossen. Mittels der Druckquellenanordnung kann an den beiden Druckkammern 118 und 140 wahlweise (ggf. auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das ggf. von der Pumpe 220 bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom, Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Weitere Einzelheiten der Doppelkupplung 12 gemäß dem beschriebenen Ausführungsbeispiel sind für den Fachmann ohne weiteres aus Fig. 1 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Betreffend weitere Einzelheiten und vorteilhafte Ausgestaltungen der Doppelkupplung 12 wird auf die deutschen Patentanmeldungen 199 55 365.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen, deren Offenbarung in den Offenbarungsgehalt der vorliegenden Anmeldung einbezogen wird. Es wird hierzu darauf hingewiesen, dass Fig. 1 der vorliegenden Anmeldung der Fig. 1 dieser Anmeldungsserie entspricht.

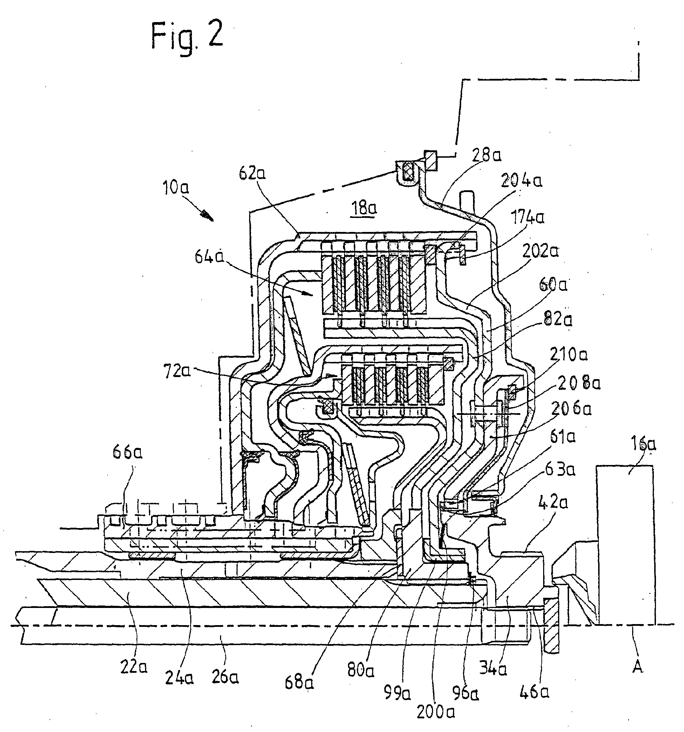

Beispiele von erfindungsgemäßen Doppelkupplungen sind in den Fig. 2-6 gezeigt. Es werden hier nur die Unterschiede gegenüber der Doppelkupplung gemäß Fig. 1 erläutert, und zwar nur insoweit, als es im Zusammenhang mit der vorliegenden Anmeldung von Interesse ist. Dabei werden die gleichen Bezugszeichen wie bei Fig. 1 für identische oder analoge Komponenten verwendet, jeweils ergänzt um einen die Ausführungsform kennzeichnenden kleinen Buchstaben. Soweit alle Ausführungsformen gemeinsam angesprochen werden, werden die kleinen Buchstaben teilweise auch weggelassen.

Zu weiteren Unterschieden gegenüber der Konstruktion der Fig. 1, insbesondere ein bei den Ausführungsbeispielen der Fig. 2-6 realisiertes Dichtungskonzept und ein bei diesen Ausführungsbeispielen realisiertes Lagerkonzept, wird auf diese Konzepte speziell behandelnde Patentanmeldungen der Anmelderin verwiesen, und zwar die deutschen Patentanmeldungen 100 60 882.5 und 100 60 883.3 (beide AT 07.12.2000), deren Offenbarung in die Offenbarung der vorliegenden Anmeldung einbezogen wird.

Noch einmal Bezug nehmend auf die Doppelkupplung der Fig. 1 ist noch auf folgendes hinzuweisen. Eine derartige Doppelkupplung wird vorteilhaft wie folgt in einem Antriebsstrang eingegliedert: das Getriebe wird in eine Vertikalstellung gebracht, in der die die Doppelkupplung aufnehmende Getriebegehäuseglocke nach oben hin offen ist. Es wird dann die entsprechend vertikal ausgerichtete Doppelkupplung von oben in die Gehäuseglocke abgesenkt. Bei der Konstruktion der Fig. 1 ist es nun so, dass die Nabe 80 durch einen Sprengring 96 oder dergleichen an der Getriebeeingangswelle 22 axial zu sichern ist, bevor dann das vom Blech 60 und der Nabe 36, 38 bzw. 34 gebildete Mitnehmerteil eingesetzt und durch den Sicherungsring 174 am Außenlamellenträger 62 festgelegt werden kann. Hierbei hat es sich als nachteilig herausgestellt, dass zum Einlegen des Sicherungsrings 174 hinter dem Mitnehmer 60, 36, 38 die Doppelkupplung vertikal wieder angehoben werden muss, da erst der Sicherungsring 174 im Zusammenwirken mit dem Mitnehmer 60, 36, 38 und weiteren Kupplungskomponenten die Doppelkupplung in ihrer axialen Sollposition hält. Das Anheben der Doppelkupplung zur Befestigung des Mitnehmers 60, 36, 38 mittels dem Sicherungsring 174 ist ein zusätzlicher Arbeitsschritt, der einen entsprechenden maschinellen oder personellen Aufwand mit sich bringt.

Ferner ist in Bezug auf die Ausführungsform der Fig. 1 festzustellen, dass das Mitnehmerblech 60 vergleichsweise massiv und dementsprechend starr ausgeführt ist, so dass von der Kurbelwelle 14 kommende, ggf. über einen Torsionsschwingungsdämpfer auf die Nabe 34 (mit ihren Teilen 36 und 38) ausgeübte Kräfte im Wesentlichen ungehindert und ungedämpft in die Doppelkupplung eingeleitet werden und insbesondere das Axiallager 68 belasten.

Demgegenüber sind bei den Ausführungsbeispielen der Fig. 2-5 die als Eingangsseite der Doppelkupplung dienende Eingangsnabe 34a, 34b, 34c bzw. 34 d einerseits und das die Dreh-Mitnahmeverbindung zwischen dem Außenlamellenträger der radial äußeren Kupplung 62a, 62b, 62c bzw. 62d und der Eingangsnabe herstellende Momentenübertragungsglied 60a, 60b, 60c bzw. 60d andererseits als gesonderte Teile, genauer gesondert einbaubare Teile, ausgeführt, wobei das Momentenübertragungsglied 60 (a, b, c bzw. d) mit dem Außenlamellenträger 62 (a, b, c bzw. d) und weiteren Kupplungskomponenten zu einer Einbau-Baueinheit vormontierbar ist. In dieser Einbau-Baueinheit ist das Momentenübertragungsglied 60 schon durch den Sicherungsring 174 (a, b, c bzw. d) am Außenlamellenträger 62 gesichert und radial innen über eine die Radial- und Axiallageranordnung 98, 100 beim Ausführungsbeispiel der Fig. 1 ersetzende Radial- und Axiallageranordnung 99 (a, b,c bzw. d) an der Nabe 80 (a, b, c bzw. d) abgestützt. Wird nun diese Einbau-Baueinheit in einer Getriebeglocke eines Getriebes montiert, beispielsweise derart, dass das Getriebe in eine Vertikalstellung gebracht wird und die Einbau-Baueinheit von oben in die Gehäuseglocke auf die Getriebeeingangswellen abgesenkt wird, so wird die alle getriebeseitig des Momentenübertragungsglieds 60 angeordneten Doppelkupplungskomponenten der Doppelkupplung, nicht aber die Eingangsnabe 34 (a, b, c bzw. d) umfassende Einbau-Baueinheit an der radial äußeren Getriebeeingangswelle 24 (a, b, c bzw. d) axial abgestützt, und zwar unter Vermittlung des ggf. mit einer Gleitlagerscheibe ausgeführten Axiallagers 68 (a, b, c bzw. d), der Nabe 80 (a, b, c bzw. d) des Innenlamellenträgers 82 (a, b, c bzw. d), der Axial- und Radiallageranordnung 99 (a, b, c bzw. d) und des axial am Außenlamellenträger 62 (a, b, c bzw. d) festgelegten Momentenübertragungsglieds 60 (a, b, c bzw. d). Die Einbau-Baueinheit wird deshalb unabhängig von der erst später zu montierenden Eingangsnabe 34 (a, b, c bzw. d) in ihrer axialen Sollstellung gehalten. Bevor die auch als Eingangswelle bezeichenbare Eingangsnabe 34 (a, b, c bzw. d) montiert wird, kann die Einbau-Baueinheit mittels eines in eine Nut der Getriebeeingangswelle 22 (a, b, c bzw. d) einzuschnappenden Sprengrings 96 (a,b,c bzw. d) und ggf. wenigstens einer Einstellscheibe zwischen dem Sprengring und der Nabe 80 (a, b, c bzw. d) axial gesichert werden. Die Eingangsnabe 34 braucht erst zu einem späteren Zeitpunkt montiert werden, so dass das Ende der Getriebeeingangswellenanordnung für die Montage des Sprengrings 96 gut zugänglich ist.

Das Momentenübertragungsglied 60 und die Eingangsnabe 34 weisen vorzugsweise einander zugeordnete Mitnahmeformationen 61 (a, b, c bzw. d) bzw. 63 (a, b, c bzw. d) auf, die durch Ineinanderstecken in Drehmitnahmeeingriff bringbar sind. Vorzugsweise sind die Mitnahmeformationen als Verzahnungen ausgeführt. Die Eingangsnabe 34 kann dann durch Einstecken montiert werden, unter Herstellung der Drehmitnahmeverbindung einerseits mit dem Momentenübertragungsglied 60 und andererseits (vermittels der Verzahnungen 46 (a, b, c bzw. d)) mit der Welle 26 (a, b, c bzw. d).

Von Seiten der Antriebseinheit auf die Eingangswelle, ggf. über einen Torsionsschwingungsdämpfer, auf die Eingangswelle 34 ausgeübte Stöße und Axialkräfte werden auf Grund der Verkopplung des Drehmomentübertragungsglieds 60 und der Eingangswelle 34 mittels ein Axialspiel zulassenden Mitnahmeformationen 61, 63 nur abgemildert an das Drehmomentübertragungsglied 60 übertragen. Man könnte daran denken, durch eine reibungsvermindernde Beschichtung der Drehmitnahmeformationen die Übertragung von derartigen Stößen und Axialkräften auf das Drehmomentübertragungsglied soweit als möglich zu reduzieren. Eine gewisse Übertragung von derartigen Stößen und Axialkräften wird unter Lastbedingungen aber nicht immer völlig ausgeschlossen werden können. Aus diesem Grund ist das Momentenübertragungsglied 60 (a, b, c bzw. d) mit einer derartige Stöße bzw. Axialkräfte dämpfenden Eigenelastizität ausgeführt, so dass diese Stöße und Axialkräfte den Außenlamellenträger 62 (a, b, c bzw. d) nur stark abgemildert oder abgedämpft erreichen und damit die Axiallager, insbesondere das Axiallager 68 (a, b, c und d),entlastet wird.

Im Folgenden werden weitere Einzelheiten der in den Fig. 2-5 gezeigten Ausführungsbeispiele näher erläutert.

Gemäß Fig. 2 ist das Momentenübertragungsglied 60a über eine Bundbuchse 99a an der Nabe 80a axial und radial abgestützt. Zwischen dem radial inneren Randbereich des Momentenübertragungsglieds 60a und der Eingangsnabe 34a ist eine Federanordnung, insbesondere eine Tellerfeder 200a vorgesehen, die die Eingangswelle 34a axial positioniert und elastisch in einem Axialabstand von dem radial inneren Bereich des Momentenübertragungsglieds 60a hält.

Das Momentenübertragungsglied 60a ist zweiteilig ausgeführt und besteht aus einem scheibenförmigen Blechteil 202a, das radial aussen einen umgebogenen und mit einer eingewalzten Verzahnung versehenen Koppelrand 204a zur Drehmitnahmekopplung mit dem Aussenlamellenträger 60a aufweist, und einem daran festgenieteten Koppelblech 206a, das radial innen die Mitnahmeformationen, insbesondere Verzahnungen 61 a,zur Koppelung mit der Eingangsnabe 34a aufweist. Die Eigenelastizität des Momentenübertragungsglieds 60a wird vor allem von der flexplattenartig ausgeführten Teilkomponente 202a bereitgestellt.

Um die nach dem Momentenübertragungsglied 60a montierte Eingangswelle 34a axial in Richtung zur Antriebseinheit abzustützen, ist ein Abstützblech 208a vorgesehen, das sich einerseits an axialen Endflächen der Mitnahmeformationen 63a und andererseits an einem in einen Haltebund der Teilkomponente 206a des Momentenübertragungsglieds 60a eingeschnappten Sicherungsring 210a axial abstützt. Als letzte Komponente der Doppelkupplung wird der Deckel 28a montiert.

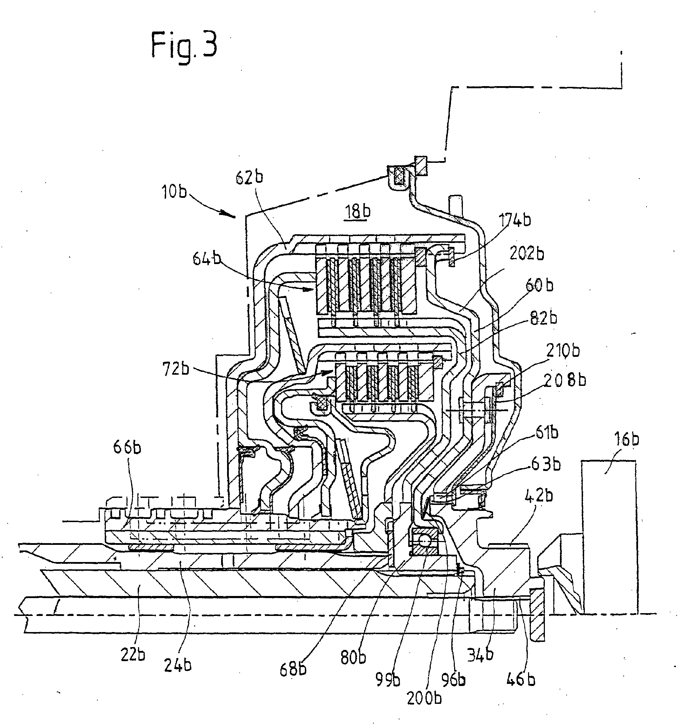

Das Ausführungsbeispiel der Fig. 3 entspricht weitgehend dem Ausführungsbeispiel der Fig. 2. Ein Unterschied liegt darin, dass anstelle der Bundbuchse 99a ein Schrägkugellager 99b vorgesehen ist, das das Momentenübertragungsglied 60b axial und radial an der Nabe 80b abstützt.

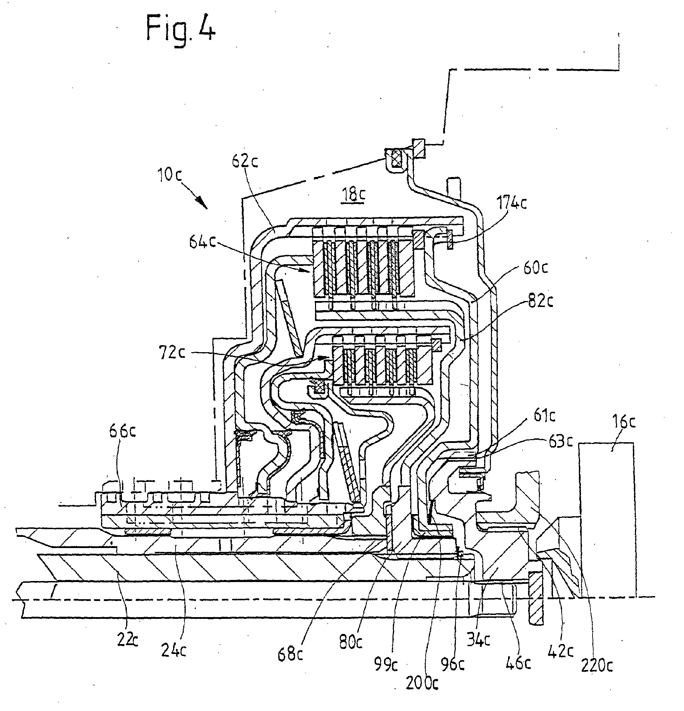

Beim Ausführungsbeispiel der Fig. 4 stützt sich das Momentenübertragungsglied 60c wiederum über eine Bundbuchse 99c axial und radial an der Nabe 80c ab. Das Momentenübertragungsglied 60c ist hier einteilig ausgeführt und weist in einem sich in axialer Richtung erstreckenden Ringabschnitt eine eingewalzte Verzahnung 61c zur Kopplung mit einer zugeordneten Verzahnung der Eingangswelle 34c auf.

Die Eingangswelle 34c wird hier einerseits wie bei den Ausführungsbeispielen der Fig. 2 und 3 durch eine Tellerfeder 200c und andererseits durch direkte Anlage einer Nabe 220c eines ansonsten nicht dargestellten, über die Verzahnung 42c mit der Eingangsnabe 34c gekoppelten Torsionsschwingungsdämpfers axial positioniert.

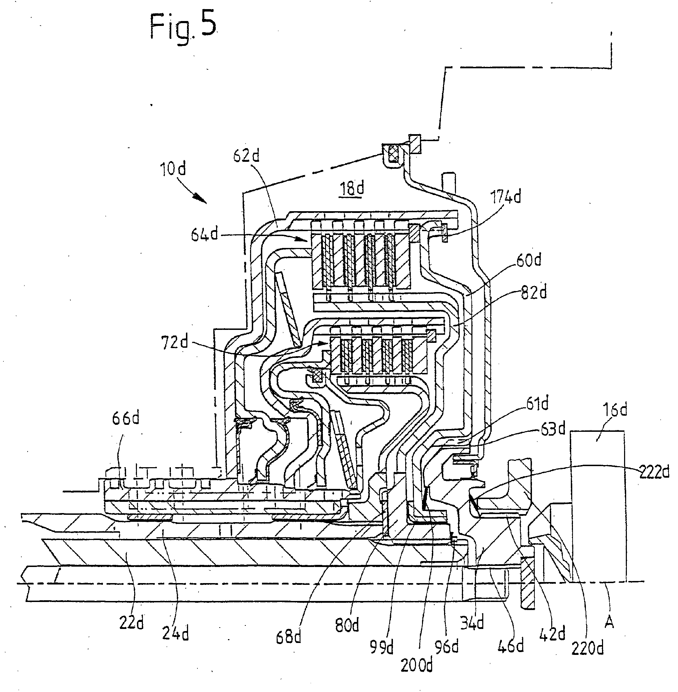

Das Ausführungsbeispiel der Fig. 5 entspricht im Wesentlichen dem Ausführungsbeispiel der Fig. 4. Der einzige Unterschied ist, dass die Eingangsnabe 34d nicht unmittelbar an der Torsionsschwingungsdämpfernabe 220d axial anliegt, sondern dass eine Federanordnung, insbesondere eine Tellerfeder 222d, dazwischen angeordnet ist. Diese Tellerfeder 222d sorgt ebenso wie die Tellerfeder 200d (bzw. 200a, 200b, 200c bei den anderen Ausführungsbeispielen) einerseits für eine Abmilderung von von der Kurbelwelle 16 herrührenden Stößen und andererseits für eine axiale Positionierung der Eingangsnabe bzw. Eingangswelle 34 (a, b, c bzw. d), wobei in Bezug auf die axiale Positionierung Toleranzen ausgeglichen werden.

Wesentliche Aspekte der vornstehend beschriebenen erfindungsgemäßen Ausführungsbeispiele sind die Folgenden: das als Mitnehmer bezeichenbare Momentenübertragungsglied 60 (a, b, c bzw. d) ist mit einem vom Aussenlamellenträger 62 (a, b, c bzw. d) gebildeten Kupplungsgehäuse vormontierbar, und es ist eine steckbare Verbindung (Verzahnung oder dergleichen) zur Eingangswelle oder Eingangsnabe 34 (a, b, c bzw. d) vorgesehen. Erst nach dem Festsetzen des Innenlamellenträgers 80 (a, b, c bzw. d) der radial äußeren Lamellenkupplung 64 (a, b, c bzw. d) auf der Getriebeeingangswelle 22 (a, b, c bzw. d) und die Eingangswelle 34 (a, b, c bzw. d) montiert. Der Zugang zur Welle bleibt dadurch auch nach dem Aufsteckken der Doppelkupplung (genauer der vom Kupplungsgehäuse und dem Mitnehmer gebildeten Einbau-Baueinheit) erhalten.

Die Doppelkupplung stützt sich beim Einbau in eine Getriebegehäuseglocke oder dergleichen direkt über den am Aussenlamellenträger 62 befestigten Mitnehmer 60, das Axial- und Radiallager 99, die Nabe 80 und das Axiallalger 68 auf der Stirnseite der Hohlwelle 24 ab, und zwar in der End-Einbaustellung der Doppelkupplung. Die Eingangswelle 34 wird in die Verzahnung 61 am Mitnehmer 60 und die Verzahnung an der Ölpumpenwelle 26 eingeschoben und dann axial gesichert, entweder durch spezielle Sicherungsmittel (im Falle der Fig. 2 und 3) oder unter Vermittlung des Torsionsschwingungsdämpfers (im Falle der Fig. 4 und 5).

Unter der Annahme, dass ein Torsionsschwingungsdämpfer vorgesehen ist, kann dieser vorteilhaft antriebseinheitsseitig an der Kurbelwelle montiert sein und, wie in den Fig. 4 und 5 gezeigt, über die Steckverzahnung 42c bzw. 42d an der in die Eingangswelle 34 c bzw. 34d angekoppelt sein. Diese Drehmomentübertragungsverbindung zwischen dem Torsionsschwingungsdämpfer und der Eingangswelle wird im Zuge der Montage des Getriebes mit der Doppelkupplung an der Antriebseinheit (Motor) hergestellt.

Der Mitnehmer 60 ist bei allen Ausführungsbeispielen als gegenüber dem Mitnehmer der Fig. 1 deutlich dünneres, flexplattenartiges Element ausgeführt. Kräfte und Stöße aus der Kurbelwelle werden deshalb in ihrer Wirkung auf die Doppelkupplung abgemildert.

Der Mitnehmer 60 ist gemäß den Ausführungsbeispielen der Fig. 2-5 vorteilhaft mit einem umgebogenen, eine eingeformte Verzahnung aufweisenden Eingriffsrand ausgeführt, der die Flächenpressung in der Verzahnung gering hält und Beschädigungen, insbesondere ein Einschlagen, vermeidet.

Wie anhand der Fig. 2 und 3 veranschaulicht, kann zur Abstützung des Momentenübertragungsglieds bzw. Mitnehmers 60 an der Nabe 80 alternativ ein Gleitlager oder ein Wälzlager verwendet werden. Ein Wälzlager, beispielsweise Schrägkugellager, ist deshalb besonders vorteilhaft, da an dieser Stelle der Doppelkupplung eine Ölmangelschmierung auftreten kann, z.B. bei längerer Konstantfahrt. Da einem Wälzlager in der Regel ein Ölnebel zur Schmierung ausreicht, hat das Wälzlager an dieser Stelle deutliche Vorteile gegenüber dem Gleitlager. Der Vorteil eines Wälzlagers liegt auch darin, dass geringere Reibungskräfte auftreten, wodurch das auf die Aus-gangsseite der radial äußeren Kupplungsanordnung wirkende Schleppmoment herabgesetzt wird und dementsprechend eine eventuell vorgesehene Synchronisierung im Getriebe geschont wird.

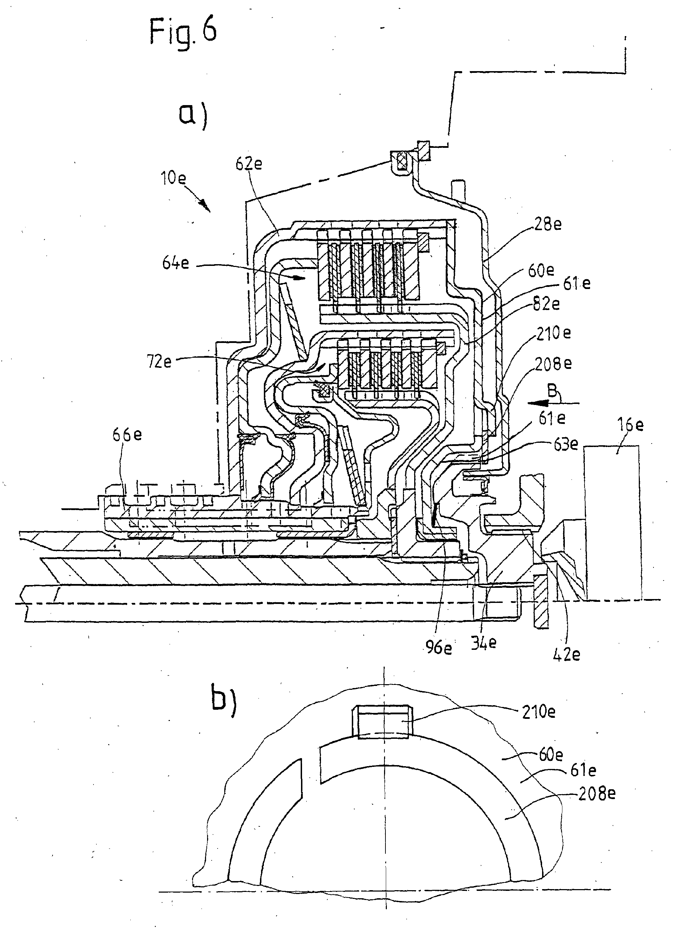

Ein weiteres Ausführungsbeispiel ist in Fig. 6 gezeigt. Die Doppelkupplung entspricht hinsichtlich der Ausgestaltung des Drehmitnahmeeingriffs zwischen dem Momentenübertragungsglied 60e und der Eingangsnabe 34e sowie hinsichtlich der Ausgestaltung des Momentenübertragungsglieds als solchem weitgehend den Ausführungsbeispielen der Fig. 4 und 5. Ein wesentlicher Unterschied ist, dass gemäß der Konstruktion der Fig. 6 das Momentenübertragungsglied 60e am als Eingangsseite dienenden Außenlamellenträger 62e angeschweißt ist, vorzugsweise unter Verwendung eines Laserschweißverfahrens.

Durch das Verschweißen wird eine spielfreie und damit klapperfreie Verbindung zwischen dem auch als Mitnehmerscheibe bezeichenbaren Momentenübertragungsglied 60e und dem Außenlamellenträger 62e erreicht. Überdies wird auf diese Weise der Außenlamellenträger an seinem offenen Ende durch das Momentenübertragungsglied gegen die Wirkung der Fliehkraft unterstützt.

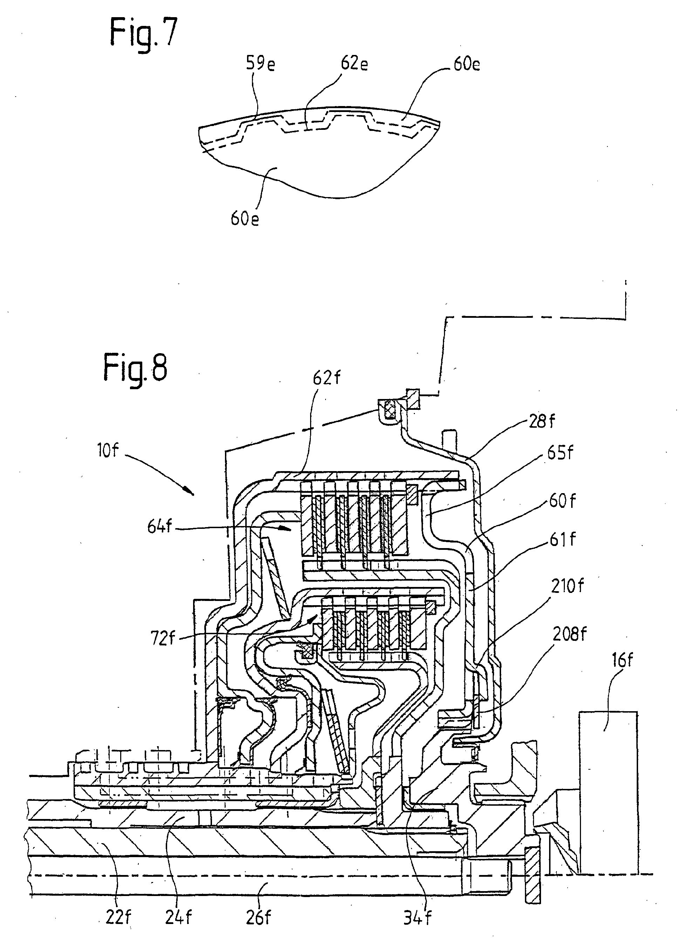

Fig. 7 zeigt eine beispielhafte Schweißung. Gemäß diesem Ausführungsbeispiel ist das Momentenübertragungsglied 60e axial an den Kopfkreisbereich einer Verzahnung des Außenlamellenträgers angeschweißt. Die entsprechenden Schweißnähte sind mit 59e bezeichnet. Zum Verschweißen kann ein getakteter Laserstrahl axial (entsprechend Pfeilrichtung B in Fig. 6) auf das an einer Stirnfläche des Außenlamellenträgers 62e anliegende Momentenübertragungsglied gerichtet werden, wobei der Laser auf die Berührungsfläche zwischen Außenlamellenträger und Momentenübertragungsglied fokussiert ist. Eine andere Möglichkeit wäre, den Laser von radial außen her getaktet einwirken zu- lassen und wiederum auf die zu verschweißenden Bereiche zu fokussieren.

Erwähnt werden sollte noch, dass es vorteilhaft sein kann, das Momentenübertragungsglied mit einer Mehrzahl von elastischen Zungen auszuführen, die sich von einem Körperabschnitt nach radial außen erstrecken und am Außenlamellenträger angeschweißt sind.

Zur axialen Sicherung der Eingangsnabe 34e ist das Momentenübertragungsglied 60e radial außerhalb der Verzahnung 61 e, 63e mit wenigstens, besser wenigstens drei in Umfangsrichtung gegeneinander versetzten, aus einem Hauptabschnitt 61 e ausgeklingten und axial durchsetzten bzw. heraus gebogenen Sicherungslaschen 210e ausgeführt, und zwischen den Hauptabschnitt und die Sicherungslaschen ist ein sprengringartiger Sicherungsring 208e eingesetzt. Der Sicherungsring 208e ist mit einer in Fig. 6b erkennbaren Montageaussparung ausgeführt, die zum Einsetzen des Rings axial zwischen die Laschen einerseits und dem Hauptabschnitt andererseits ein Zusammendrücken des Rings und damit eine Verringerung von dessen Radialabmessung ermöglicht. Diese Montageaussparung ist in Umfangsrichtung schmäler als die Laschen ausgeführt, um ein Herausfallen des Sicherungsrings zuverlässig zu verhindern.

Eine weitere Möglichkeit der Verbindung zwischen dem Momentenübertragungsglied und dem Außenlamellenträger ist in Fig. 8 gezeigt. Das Momentenübertragungsglied ist in einem radialen Außenbereich mit elastischen Zungen 65f ausgeführt, die radial außen Eingriffszähne aufweisen, welche unter radialer Vorspannung in die Verzahnung des Außenlamellenträgers eingesetzt sind. Das Prinzip einer derartigen Drehverkopplung und die Art und Weise, wie der Eingriff zwischen den Verzahnungen hergestellt werden kann, ist ausführlich in den Offenlegungsschriften DE 198 48 281, DE 198 48 252 A1 und DE 198 48 253 A1 beschrieben, auf die ausdrücklich verwiesen wird. Ein zur Herstellung des Eingriffs einsetzbares Spannwerkzeug kann an den axial über den Außenlamellenträger überstehenden Enden der Zungen 65f angreifen.

Die in Fig. 8 gezeigte Verkopplung des Momentenübertragungsglieds mit dem Außenlamellenträger ist dahingehend äußerst vorteilhaft, dass einerseits eine spielfreie Verbindung zwischen dem Momentenübertragungsglied und dem Außenlamellenträger erreicht wird und dass andererseits das Momentenübertragungsglied vom Außenlamellenträger einfach demontierbar ist, beispielsweise zur Aufarbeitung (Recycling) der Kupplungseinrichtung 10f.

## Patentansprüche

1. Mehrfach-Kupplungseinrichtung, gegebenenfalls Doppel-Kupplungseinrichtung, für die Anordnung in einem Antriebsstrang eines Kraftfahrzeugs zwischen einer Antriebseinheit und einem Getriebe, wobei die Kupplungseinrichtung (12) eine einer ersten Getriebeeingangswelle (22) des Getriebes zugeordnete erste Kupplungsanordnung (64) und eine einer zweiten Getriebeeingangswelle des Getriebes zugeordnete zweite Kupplungsanordnung (72) aufweist zur Momentenübertragung zwischen der Antriebseinheit und dem Getriebe, wobei von den Getriebeeingangswellen wenigstens eine (22, 24) als Hohlwelle ausgebildet ist und eine (22) der Getriebeeingangswellen durch eine andere, als Hohlwelle ausgebildete Getriebeeingangswelle (24) verläuft,
wobei eine Eingangsseite (62) einer (64) der Kupplungsanordnungen im Momentenübertragungsweg zwischen der Antriebseinheit und dem Getriebe über eine andere (72) der Kupplungsanordnungen liegt, wobei die Eingangsseite (62) der einen Kupplungsanordnung (64) über wenigstens ein sich bezogen auf eine zu wenigstens einer der Getriebeeingangswellen koaxiale Kupplungsachse (A) in radialer Richtung erstreckendes, vorzugsweise scheibenförmiges Momentenübertragungsglied (60) mit einer Eingangsseite (34) der Kupplungseinrichtung (10) in Momentenübertragungsverbindung steht, wobei die Eingangsseite (34) der Kupplungseinrichtung zur direkten oder indirekten Ankoppelung einer Abtriebswelle (16) der Antriebseinheit vorgesehen und ausgebildet ist, und
wobei das Momentenübertragungsglied (60) und die Eingangsseite (34) der Kupplungseinrichtung von voneinander gesonderten Bauteilen gebildet sind und das Momentenübertragungsglied (60) unabhängig von der Eingangsseite (34) der Kupplungseinrichtung direkt oder indirekt an wenigstens einer (22, 24) der Getriebeeingangswellen axial oder/und radial abgestützt oder abstützbar ist.

2. Mehrfach-Kupplungseinrichtung, gegebenenfalls Doppel-Kupplungseinrichtung, für die Anordnung in einem Antriebsstrang eines Kraftfahrzeugs zwischen einer Antriebseinheit und einem Getriebe, wobei die Kupplungseinrichtung (12) eine einer ersten Getriebeeingangswelle (22) des Getriebes zugeordnete erste Kupplungsanordnung (64) und eine einer zweiten Getriebeeingangswelle des Getriebes zugeordnete zweite Kupplungsanordnung (72) aufweist zur Momentenübertragung zwischen der Antriebseinheit und dem Getriebe, wobei von den Getriebeeingangswellen wenigstens eine (22, 24) als Hohlwelle ausgebildet ist und eine (22) der Getriebeeingangswellen durch eine andere, als Hohlwelle ausgebildete Getriebeeingangswelle (24) verläuft,
wobei eine Eingangsseite (62) einer (64) der Kupplungsanordnungen im Momentenübertragungsweg zwischen der Antriebseinheit und dem Getriebe über eine andere (72) der Kupplungsanordnungen liegt, wobei die Eingangsseite (62) der einen Kupplungsanordnung (64) über wenigstens ein sich bezogen auf eine zu wenigstens einer der Getriebeeingangswellen koaxiale Kupplungsachse (A) in radialer Richtung erstreckendes, vorzugsweise scheibenförmiges Momentenübertragungsglied (60) mit einer Eingangsseite (34) der Kupplungseinrichtung (10) in Momentenübertragungsverbindung steht, wobei die Eingangsseite (34) der Kupplungseinrichtung zur direkten oder indirekten Ankoppelung einer Abtriebswelle (16) der Antriebseinheit vorgesehen und ausgebildet ist, und
wobei das Momentenübertragungsglied (60) und die Eingangsseite (34) der Kupplungseinrichtung von voneinander gesonderten Bauteilen gebildet sind und die Eingangsseite (62) der einen Kupplungsanordnung (64), das Momentenübertragungsglied (60) und die Eingangsseite (34) der Kupplungseinrichtung derart angeordnet und ausgebildet sind, dass beim Eingliedern der Kupplungseinrichtung (10) in einem Antriebsstrang die Eingangsseite (62) der einen Kupplungsanordnung (64) und das Momentenübertragungsglied (60) gemeinsam als Teile oder Abschnitte einer Einbau-Baueinheit (62, 64, 72) in einen Antriebsstrang auf Seiten des Getriebes angliederbar sind und dass nach dem Angliedern dieser Einbau-Baueinheit die Eingangsseite (34) der Kupplungseinrichtung (10) unter Herstellung der Momentenübertragungsverbindung an der am Getriebe angeordneten Einbau-Baueinheit angliederbar ist.

3. Kupplungseinrichtung nach Anspruch 2, **dadurch gekennzeichnet, dass** die Eingangsseite (34) der Kupplungseinrichtung (10) und das Momentenübertragungsglied (60) mit Mitnahmeformationen (61, 63) ausgeführt sind, die vermittels einer eine axiale Relativbewegung umfassenden Relativbewegung, vorzugsweise vermittels einer rein axialen Relativbewegung, in bzw. außer gegenseitigen Mitnahmeeingriff bringbar sind, wobei die Mitnahmeformationen (61, 63) vorzugsweise dazu ausgebildet sind, unter Erhalt des Mitnahmeeingriffs Axialspiel zwischen der Eingangsseite (34) und dem Momentenübertragungsglied (60) zuzulassen.

4. Kupplungseinrichtung nach Anspruch 2 oder 3, **dadurch gekennzeichnet, dass** die Einbau-Baueinheit (62, 64, 72) wenigstens einen Axialanschlag (80) aufweist, der - gegebenenfalls unter Vermittlung wenigstens einer Axiallageranordnung (68) - unabhängig von der Eingangsseite (34) der Kupplungseinrichtung und im Zusammenwirken mit einem getriebeseitigen Gegen-Axialanschlag für die Baueinheit eine axiale Sollposition oder Position maximaler axialer Annäherung an das Getriebe definiert.

5. Kupplungseinrichtung nach Anspruch 4, **dadurch gekennzeichnet, dass** die Einbau-Baueinheit (62, 64, 72) oder wenigstens die Eingangsseite der einen Kupplungsanordnung unter-Vermittlung des Momentenübertragungsglieds (60) am Gegen-Axialanschlag axial abgestützt oder abstützbar ist.

6. Kupplungseinrichtung nach Anspruch 5, **dadurch gekennzeichnet, dass** das Momentenübertragungsglied (60) unabhängig von der Eingangsseite (34) der Kupplungseinrichtung (10) direkt oder indirekt an wenigstens einer der Getriebeeingangswellen (22, 24) axial oder/und radial abgestützt ist.

7. Kupplungseinrichtung nach einem der Ansprüche 2 bis 5, **dadurch gekennzeichnet, dass** das Momentenübertragungsglied (60f) unter Vermittlung der Eingangsseite (34f) der Kupplungseinrichtung (10f) an wenigstens einer der Getriebeeingangswellen (22f, 24f) axial oder/und radial abgestützt ist.

8. Kupplungseinrichtung nach Anspruch 6 oder 7, **dadurch gekennzeichnet, dass** nur eine radiale oder nur eine statisch unwesentliche Abstützung des Momentenübertragungsglieds (60f) an einer von den Getriebeeingangswellen (22f, 24f) gebildeten Getriebeeingangswellenanordnung vorgesehen ist.

9. Kupplungseinrichtung nach einem der Ansprüche 1 bis 8, **dadurch gekennzeichnet, dass** das Momentenübertragungsglied (60) in einem radial inneren Bereich unter Vermittlung einer an einer der Getriebeeingangswellen angeordneten Ausgangsseite (80) einer (64) der Kupplungsanordnungen an wenigstens einer der Getriebeeingangswellen (22, 24) axial oder/und radial abgestützt oder abstützbar ist.

10. Kupplungseinrichtung nach Anspruch 9, **dadurch gekennzeichnet, dass** zwischen dem radial inneren Bereich und der Ausgangsseite (80) eine Lageranordnung (99) vorgesehen, die die radiale oder/und axiale Abstützung vermittelt.

11. Kupplungseinrichtung nach Anspruch 10, **dadurch gekennzeichnet, dass** die Lageranordnung als vorzugsweise eine Bundbuchse (99a; 99c; 99d) aufweisende Gleitlageranordnung (99a; 99c; 99d) ausgebildet ist.

12. Kupplungseinrichtung nach Anspruch 10, **dadurch gekennzeichnet, dass** die Lageranordnung als Wälzlageranordnung (99b), vorzugsweise als Schrägkugellageranordnung (99b), ausgebildet ist.

13. Kupplungseinrichtung nach einem der Ansprüche 1 bis 12, **dadurch gekennzeichnet, dass** das Momentenübertragungsglied (60a; 60b) aus mehreren, vorzugsweise dauerhaft miteinander verbundenen Bauteilen (202a, 206a; 202b, 206b) gebildet ist, von denen wenigstens ein Bauteil (202a; 202b) wenigstens einen Verbindungs- oder Ankoppelabschnitt zur Verbindung mit bzw. Ankopplung an der Eingangsseite (62a; 62b) der einen (64a; 64b) Kupplungsanordnung und wenigstens ein anderes Bauteil (206a; 206b) wenigstens einen gegebenenfalls die Mitnahmeformationen (61a; 61b) aufweisenden Verbindung- oder Ankoppelabschnitt zur Verbindung mit bzw. Ankopplung an der Eingangsseite (34a; 34b) der Kupplungseinrichtung aufweist.

14. Kupplungseinrichtung nach einem der Ansprüche 1 bis 13, **dadurch gekennzeichnet, dass** zwischen dem Momentenübertragungsglied (60) und der Eingangsseite (34) der Kupplungseinrichtung (10) eine Federanordnung (200) vorgesehen ist, die auf die Eingangsseite (34) ausgeübte axiale Stöße gegenüber dem Momentenübertragungsglied (60) zumindest teilweise abdämpft.

15. Kupplungseinrichtung nach einem der Ansprüche 1 bis 14, **gekennzeichnet durch** eine Positionieranordnung (200a, 208a; 200b, 208b; 200c, 220c; 200d, 222d), die das Momentenübertragungsglied (60) oder/und die Eingangsseite (34) der Kupplungseinrichtung relativ zu wenigstens einer anderen Komponente des Antriebsstrangs, insbesondere der Kupplungseinrichtung, axial positioniert.

16. Kupplungseinrichtung nach Anspruch 15, **dadurch gekennzeichnet, dass** die Positionieranordnung wenigstens eine Federanordnung (200 bzw. 222d) zwischen dem Momentenübertragungsglied (60) und der Eingangsseite (34) der Kupplungseinrichtung oder/und zwischen der Eingangsseite (34d) der Kupplungseinrichtung und einer der Kupplungseinrichtung axial benachbarten Komponente des Antriebsstrangs, gegebenenfalls einer Ausgangsseite (220d) einer Torsionsschwingungsdämpferanordnung, umfasst.

17. Kupplungseinrichtung nach Anspruch 15 oder 16, **dadurch gekennzeichnet, dass** die Positionieranordnung wenigstens ein Abstütz- oder Sicherungsglied (208a; 208b; 208e) aufweist, das die Eingangsseite (34a; 34b; 34e) der Kupplungseinrichtung in Richtung zur Antriebseinheit am Momentenübertragungsglied (60a; 60b; 60e) abstützt oder sichert.

18. Kupplungseinrichtung nach Anspruch 17, **dadurch gekennzeichnet, dass** das Abstütz- oder Sicherungsglied als Abstütz- oder Sicherungsblech (208a; 208b) oder als vorzugsweise sprengringartiger Abstütz- oder Sicherungsring (208e) ausgeführt ist.

19. Kupplungseinrichtung nach Anspruch 18, **dadurch gekennzeichnet, dass** das Abstütz- oder Sicherungsglied (208a; 208b) momentenübertragungsgliedseitig zwischen das Momentenübertragungsglied (60a; 60b) und einen daran angebrachten Sicherungsring (210a; 210b) eingreift.

20. Kupplungseinrichtung nach Anspruch 18, **dadurch gekennzeichnet, dass** das Abstütz- oder Sicherungsglied (208e) momentenübertragungsgliedseitig zwischen wenigstens einen Hauptabschnitt (61e) des Momentenübertragungsglieds (60e) und wenigstens eine daran ausgeklingte und axial herausgebogene Sicherungslasche (210e) eingreift.

21. Kupplungseinrichtung nach einem der Ansprüche 15 bis 20, **dadurch gekennzeichnet, dass** die Positionieranordnung an der Eingangsseite (34c) der Kupplungseinrichtung wenigstens eine Anlagefläche aufweist, die innerhalb eines Antriebsstrangs an einer Gegen-Anlagefläche einer der Kupplungseinrichtung axial benachbarten Komponente (220c) des Antriebsstrangs axial abstützbar ist.

22. Kupplungseinrichtung nach einem der Ansprüche 1 bis 21, **dadurch gekennzeichnet, dass** das Momentenübertragungsglied (60) eine Eigenelastizität aufweist, die unter Vermittlung der Eingangsseite (34) der Kupplungseinrichtung auf das Momentenübertragungsglied ausgeübte axiale Stöße gegenüber der Eingangsseite (62) der einen Kupplungsanordnung (64) zumindest teilweise abdämpft.

23. Mehrfach-Kupplungseinrichtung, gegebenenfalls Doppel-Kupplungseinrichtung, für die Anordnung in einem Antriebsstrang eines Kraftfahrzeugs zwischen einer Antriebseinheit und einem Getriebe, wobei die Kupplungseinrichtung (12) eine einer ersten Getriebeeingangswelle (22) des Getriebes zugeordnete erste Kupplungsanordnung (64) und eine einer zweiten Getriebeeingangswelle des Getriebes zugeordnete zweite Kupplungsanordnung (72) aufweist zur Momentenübertragung zwischen der Antriebseinheit und dem Getriebe, wobei von den Getriebeeingangswellen wenigstens eine (22, 24) als Hohlwelle ausgebildet ist und eine (22) der Getriebeeingangswellen durch eine andere, als Hohlwelle ausgebildete Getriebeeingangswelle (24) verläuft,
wobei eine Eingangsseite (62) einer (64) der Kupplungsanordnungen im Momentenübertragungsweg zwischen der Antriebseinheit und dem Getriebe über eine andere (72) der Kupplungsanordnungen liegt, wobei die Eingangsseite (62) der einen Kupplungsanordnung (64) über wenigstens ein sich bezogen auf eine zu wenigstens einer der Getriebeeingangswelleri koaxiale Kupplungsachse (A) in radialer Richtung erstreckendes, vorzugsweise scheibenförmiges Momentenübertragungsglied (60) mit einer Eingangsseite (34) der Kupplungseinrichtung (10) in Momentenübertragungsverbindung steht, wobei die Eingangsseite (34) der Kupplungseinrichtung zur direkten oder indirekten Ankoppelung einer Abtriebswelle (16) der Antriebseinheit vorgesehen und ausgebildet ist, und
wobei das Momentenübertragungsglied (60) eine Eigenelastizität aufweist, die unter Vermittlung der Eingangsseite (34) der Kupplungseinrichtung auf das Momentenübertragungsglied ausgeübte axiale Stöße gegenüber der Eingangsseite (62) der einen Kupplungsanordnung (64) zumindest teilweise abdämpft.

24. Kupplungseinrichtung nach Anspruch 22 oder 23, **dadurch gekennzeichnet, dass** das Momentenübertragungsglied mit einer elastischen Platte (202a; 202b; 60c; 60d), vorzugsweise in der Art einer Flexplatte, ausgeführt ist.

25. Kupplungseinrichtung nach einem der vorhergehenden Ansprüche, **dadurch gekennzeichnet, dass** das Momentenübertragungsglied (60e) mit der ggf. als Lamellenträger, vorzugsweise als Außenlamellenträger, ausgebildeten Eingangsseite (62e) der einen Kupplungsanordnung (64e) verschweißt ist.

26. Kupplungseinrichtung nach Anspruch 25, **dadurch gekennzeichnet, dass** das Momentenübertragungsglied (60e) an einem Kopfkreisbereich einer Verzahnung des Lamellenträgers (62e) angeschweißt ist.

27. Kupplungseinrichtung nach Anspruch 25 oder 26, **dadurch gekennzeichnet, dass** das Momentenübertragungsglied (60e) unter Anwendung eines vorzugsweise getakteten Laserschweißverfahrens an der Eingangsseite (62e) angebracht ist.

28. Kupplungseinrichtung nach einem der vorhergehenden Ansprüche, **dadurch gekennzeichnet, dass** die ggf. als Lamellenträger, vorzugsweise Außenlamellenträger, ausgebildete Eingangsseite (62f) der einen Kupplungsanordnung (64f) mit einer ersten Verzahnung ausgeführt ist und das Momentenübertragungsglied (60f) mit einer zweiten Verzahnung ausgeführt ist, wobei die beiden Verzahnungen radial ineinandergreifen und radial in den Eingriff vorgespannt sind.

29. Kupplungseinrichtung nach einem der vorhergehenden Ansprüche, **dadurch gekennzeichnet, dass** das Momentenübertragungsglied (60f) einen zentralen Körperbereich (61f) aufweist, von welchem nach radial außen eine Mehrzahl elastischer zungenartiger Vorsprünge (65f) ausgeht, wobei in einem radial äußeren Bereich jedes Vorsprungs (65f) ein Verbindunsabschnitt zur Verbindung mit der Eingangsseite (62f) der einen Kupplungsanordnung (64) vorgesehen ist, der gegebenenfalls wenigstens einen Zahn der zweiten Verzahnung aufweist.

30. Kupplungseinrichtung nach Anspruch 29, **dadurch gekennzeichnet, dass** ausgehend vom zentralen Körperbereich (61f) die radialen Vorsprünge (65f) zunächst in einem ersten Biegungsbereich vorzugsweise näherungsweise in Achsrichtung abgebogen sind, dann in einem zweiten Biegungsbereich im Wesentlichen nach radial außen abgebogen sind, dann in einem- dritten Biegungsbereich vorzugsweise wieder näherungsweise in Achsrichtung abgebogen sind und in diesem sich näherungsweise in Achsrichtung erstreckenden Bereich gegebenenfalls wenigstens einen Zahn der zweiten Verzahnung aufweisen.

31. Kupplungseinrichtung nach einem der Ansprüche 28 bis 30, **dadurch gekennzeichnet, dass** die erste und die zweite Verzahnung derart ausgeführt und radial vorgespannt sind, dass ein im Wesentlichen spielfreier Eingriff gewährleistet ist.

32. Kupplungseinrichtung nach Anspruch 31, **dadurch gekennzeichnet, dass** Zähne der ersten und zweiten Verzahnung mit aufeinander abgestimmten Keilflächen an ihren Zahnflanken ausgeführt sind.

33. Kupplungseinrichtung nach einem der vorhergehenden Ansprüche, **dadurch gekennzeichnet, dass** die erste (64) und die zweite (72) Kupplungsanordnung jeweils als vorzugsweise nasslaufende Lamellen-Kupplungsanordnung ausgeführt sind.

34. Kupplungseinrichtung nach einem der vorhergehenden Ansprüche, **dadurch gekennzeichnet, dass** die Eingangsseite (62) der einen Kupplungsanordnung von einem Lamellenträger (62), vorzugsweise Außenlamellenträger (62) der einen Kupplungsanordnung (64), vorzugsweise der radial äußeren Kupplungsanordnung (64), gebildet ist.

35. Kupplungseinrichtung nach Anspruch 34, **dadurch gekennzeichnet, dass** der Außenlamellenträger (62) zusammen mit der Momentenübertragungsglied (60) ein Gehäuse bildet, dass die Lamellen der ersten und der zweiten Kupplungsanordnung aufnimmt.

36. Kupplungseinrichtung nach einem der vorhergehenden Ansprüche, **dadurch gekennzeichnet, dass** das Momentenübertragungsglied (60) an wenigstens einer (80) oder/und unter Vermittlung wenigstens einer Nabe eines Lamellenträgers, vorzugsweise Innenlamellenträgers (82), axial oder/und radial abgestützt oder abstützbar ist.

37. Kupplungseinrichtung nach einem der vorhergehenden Ansprüche, **dadurch gekennzeichnet, dass** die Eingangsseite (34) der Kupplungseinrichtung (10) von einem Wellenteil oder Nabenteil (34) gebildet ist.

38. Kraftfahrzeug-Antriebsstrang, umfassend eine Antriebseinheit, ein wenigstens zwei Getriebeeingangswellen (22, 24) ausweisendes Getriebe und eine Kupplungseinrichtung (10) nach einem der Ansprüche 1 bis 37 zur Momentenübertragung zwischen der Antriebseinheit und dem Getriebe.

39. Verfahren zur Eingliederung einer Kupplungseinrichtung nach einem der Ansprüche 1 bis 37 zwischen einer Antriebseinheit und einem Getriebe in einen Kraftfahrzeug-Antriebsstrang, **gekennzeichnet durch** die Schritte:
- Angliedern einer die Eingangsseite (62) der einen Kupplungsanordnung (64) und das Momentenübertragungsglied (60) umfassenden Einbau-Baueinheit (62, 64, 72) auf Seiten des Getriebes;
- Angliedern der Eingangsseite (34) der Kupplungseinrichtung (10) unter Herstellung der Momentenübertragungsverbindung an der am Getriebe angeordneten Einbau-Baueinheit (62, 64, 72);
- Zusammenfügen des Antriebsstrangs unter Herstellung einer Momentenübertragungsverbindung zwischen der Abtriebswelle (16) der Antriebseinheit und der Eingangsseite (34) der Kupplungseinrichtung (10).

40. Verfahren nach Anspruch 39, **dadurch gekennzeichnet, dass** im Zuge des Angliederns der Einbau-Baueinheit (62, 64, 72) auf Seiten des Getriebes das Momentenübertragungsglied (60) direkt oder indirekt an wenigstens einer der Getriebeeingangswellen (22, 24) axial oder/und radial abgestützt wird.

41. Verfahren nach Anspruch 39 oder 40, **dadurch gekennzeichnet, dass** zum Angliedern der Einbau-Baueinheit (62, 64, 72) auf Seiten des Getriebes und Angliedern der Eingangsseite (34) der Kupplungseinrichtung (10) an der am Getriebe angeordneten Einbau-Baueinheit eine sich beim fertiggestellten Antriebsstrang im wesentlichen in Antriebsstrang-Längsrichtung erstreckende Getriebeachse in eine Stellung gebracht wird, in der sich die Getriebeachse zumindest näherungsweise in Vertikalrichtung erstreckt.

42. Verfahren nach Anspruch 41, **dadurch gekennzeichnet, dass** im Zuge der Angliederung der Einbau-Baueinheit (62, 64, 72) diese von oben in Richtung zum Getriebe abgesenkt wird, vorzugsweise bis wenigstens eine Axialanschlagpaarung wirksam wird.

43. Verfahren nach Anspruch 42, **dadurch gekennzeichnet, dass** im Zuge der Angliederung der Eingangsseite (34) diese von oben in Richtung zur Einbau-Baueinheit (62, 64, 72) abgesenkt wird.

44. Verfahren nach Anspruch 43, **dadurch gekennzeichnet, dass** die Angliederung der Eingangsseite (34) ohne ein Anheben der Einbau-Baueinheit (62, 64, 72) auskommt.
